# EUROPÄISCHE PATENTSCHRIFT

(11) **EP 3 021 253 B1**
(45) Veröffentlichungstag und Bekanntmachung des Hinweises auf die Patenterteilung: **03.07.2019**
(21) Anmeldenummer: 14193425.7
(22) Anmeldetag: 17.11.2014
(51) Int. Cl.: G06F 21/60

(54) **EDV-Kontrolleinheit für einen Zwischenspeicher, Netzwerk und Verfahren zur authentifizierten Ansteuerung eines Zielgerätes**
EDP control unit for an intermediate storage system, network and method for authenticated activation of a target mechanism
Unité de contrôle informatique pour une mémoire tampon, réseau et procédé de commande authentifiée d'un appareil cible

(43) Veröffentlichungstag der Anmeldung: 18.05.2016
(73) Patentinhaber: BWO Systems AG, 6214 Schenkon (CH)
(72) Erfinder: Leuenberger, Christoph, 6332 Hagendorn (CH); Kirchmayer, Helmut, 6260 Reiden (CH)
(74) Vertreter: Hepp Wenger Ryffel AG

(56) Entgegenhaltungen:
- EP-A2- 1 465 051
- EP-A2- 1 698 967
- US-A1- 2002 051 178

## Beschreibung

Die Erfindung betrifft eine EDV-Kontrolleinheit für einen Zwischenspeicher sowie ein Netzwerk und ein Verfahren zur authentifizierten Ansteuerung eines Zielgerätes gemäss den Oberbegriffen der unabhängigen Ansprüche.

Die Ansteuerung von Zielgeräten, beispielsweise zur Bearbeitung von Aufträgen kommt in Computernetzwerken zum Einsatz. Dabei ist es oft erforderlich, sensible Informationen erst nach einer Authentifizierung an einem Zielgerät zu verarbeiten, um spezielle Sicherheitsaspekte zu gewährleisten.

Authentifizierungsfunktionen von Druckern sind bekannt. US 2006/0177059 A1 offenbart einen Drucker mit einer Kommunikationseinheit, welcher Druckaufträge von einem externen Client empfängt. Eine Vorrichtung zur Authentifizierung beispielsweise mittels eines Fingerabdruckes dient zur authentifizierten Ausführung des Druckauftrags. Der Druckauftrag liegt dementsprechend vor der Ansteuerung des Druckers bei einem zuvor ausgewählten Drucker bereits vor.

Nachteilig am Stand der Technik ist, dass eine Auslösung des Druckauftrags nicht höchsten Sicherheitsstandards genügt.

Es ist daher die Aufgabe der Erfindung, die Nachteile des Standes der Technik zu überwinden.

Insbesondere sollen eine EDV-Kontrolleinheit für einen Zwischenspeicher aufweisend ein System zur Benutzer-Authentifizierung, ein Netzwerk sowie ein Verfahren zur authentifizierten Ansteuerung eines Zielgeräts zur Verfügung gestellt werden, die eine verbesserte Sicherheit der Daten ermöglichen.

Diese Aufgaben werden durch die in den unabhängigen Patentansprüchen aufgeführten Merkmale gelöst.

Die Erfindung betrifft eine EDV-Kontrolleinheit für einen Zwischenspeicher, insbesondere einen Printserver. Der Zwischenspeicher ist derart ausgestaltet, dass ein von mindestens einem Client generierter Auftrag zwischenspeicherbar ist. Die EDV-Kontrolleinheit weist ein System zur Benutzer-Authentifizierung auf. Mittels des Systems ist ein Zielgerät für den vom Client empfangenen und in dem Zwischenspeicher zwischengespeicherten Auftrag, insbesondere Druckauftrag, benutzerauthentifiziert auswählbar und die benutzerauthentifizierte Übermittlung des zwischengespeicherten Auftrags an das ausgewählte Zielgerät durchführbar. Auf diese Weise muss für die Ausführung eines Auftrags das Zielgerät nicht vorab ausgewählt werden, sondern der Auftrag kann nach der erfolgten Benutzer-Authentifizierung einem Zielgerät zugewiesen und übermittelt werden. Auf diese Weise liegt ein Druckauftrag nicht unmittelbar beim vorab ausgewählten Zielgerät vor, sondern kann im Anschluss an eine Benutzer-Authentifizierung an das gewünschte Zielgerät übermittelt werden. Unter Authentifizierung wird hierbei der Nachweis verstanden, dass es sich um eine bestimmte Person handelt.

Die EDV-Kontrolleinheit und der Zwischenspeicher, insbesondere Printserver, können in einer Baueinheit oder separat voneinander vorliegen. Ebenso können die EDV-Kontrolleinheit und das mindestens eine Zielgerät in einer Baueinheit oder separat voneinander vorliegen.

Das System zur Benutzer-Authentifizierung kann auf der Erkennung einer oder mehrerer Venen, insbesondere auf Handflächen- Venen-Erkennung, basieren. Derart können benutzerspezifische Charakteristika von Blutgefässen für die Erkennung herangezogen werden, was einen besonders hohen Sicherheitsstandard gewährleistet. Handflächen-Venen-Erkennung ist auch als Handflächen-Venen-Biometrie bekannt. Diese Systeme erlauben den Einsatz von biometrischer Technologie, welche die Sicherheit in IT-Anwendungsbereichen erhöht und Anwendungsprozesse vereinfacht. Ein derartiges System ist als PalmSecure-Sensor-(PS)-Technologie bekannt. Mittels eines derartigen Systems erfolgt auch eine Lebenderkennung eines Benutzers, da die Hand für die Venen-Erkennung durchblutet sein muss.

Das System zur Benutzer-Authentifizierung kann auch auf der Erkennung eines Fingerabdruckes, einer Retina, einer Iris oder einer Stimme basieren. Dementsprechend basiert die Erkennung auf benutzerspezifischen Eigenschaften, was einen hohen Sicherheitsstandard gewährleistet.

Des Weiteren kann das System zur Benutzer-Authentifizierung Elemente aufweisen wie einen Scanner, einen Smartcard Reader und PIN-Abfrage. Mit dem Scanner können beispielsweise Handvenen, Fingerabrücke oder andere benutzerspezifische Eigenschaften erfasst werden. Mittels dem Smartcard Reader und der PIN-Abfrage können weitere Sicherheitsabfragen erfolgen. Die EDV-Kontrolleinheit kann die vorgenannten Elemente einzeln oder in Kombination miteinander aufweisen. Ganz besonders bevorzugt werden alle drei Kategorien zur Sicherheitsabfrage kombiniert. Solche basieren auf "Haben" (Karte), "Wissen" (Code, etc.) und "Sein" (Handvenen, etc.).

Das System zur Benutzer-Authentifizierung kann des Weiteren einen Sensor aufweisen, der derart ausgestaltet ist, dass je nach Position des für die Benutzer-Authentifizierung verwendeten Biometrie-Eigenschaft eine Zuweisung an ein Zielgerät erfolgt. Beispielsweise kann bei der Verwendung eines Handvenenscanners die angezeigte Handposition erfasst und entsprechend einer Zuordnung von Position und Zielgerät ein Auftrag an ein gewünschtes Zielgerät übermittelt werden. Beispielsweise kann die Orientierung der Handfläche erfasst werden. Orientierung können eine rechtsseitige Ausrichtung oder eine linksseitige Ausrichtung sein. Durch eine rechtsseitige Ausrichtung kann beispielsweise ein erstes Zielgerät und mit einer linksseitigen Ausrichtung ein zweites Zielgerät ausgewählt werden. Auf diese Weise wird eine benutzerfreundliche Handhabung der Benutzer-Authentifizierung sowie der Auswahl eines Zielgerätes, insbesondere eines Druckers, gewährleistet.

Ein weiterer Aspekt der Erfindung betrifft ein Netzwerk umfassend mindestens einen Client, insbesondere Computer, zur Generierung eines Auftrags, mindestens einen, insbesondere zentralen, Zwischenspeicher, insbesondere einen Printserver. Der Zwischenspeicher ist derart ausgestaltet, dass ein von dem mindestens einen Client, insbesondere Computer, generierter Auftrag zwischenspeicherbar ist. Unter einem zentralen Zwischenspeicher versteht sich hier und im Folgenden ein Zwischenspeicher, welcher Aufträge von einem Client empfangen und an ein Zielgerät übermitteln kann. Des Weiteren umfasst das Netzwerk mindestens eine EDV-Kontrolleinheit, insbesondere wie vorgängig erläutert, aufweisend ein System zur Benutzer-Authentifizierung. Des Weiteren umfasst das Netzwerk mindestens zwei Zielgeräte, insbesondere Drucker. Die mindestens eine EDV-Kontrolleinheit ist dabei derart ausgestaltet, dass mittels des Systems zur Benutzer-Authentifizierung, insbesondere durch Handflächen-VenenErkennung, ein benutzerauthentifiziertes Auswählen eines der mindestens zwei Zielgeräte, insbesondere Drucker, ermöglicht wird und ein Auftrag authentifiziert von dem Zwischenspeicher, insbesondere dem Printserver, an eines der mindestens zwei Zielgeräte, insbesondere Drucker, leitbar ist. Auf diese Weise wird ein Netzwerk bereitgestellt, in welchem eine Benutzer-Authentifizierung auf Ebene des Zwischenspeichers, insbesondere dem Printserver, erfolgt. Die Auswahl eines Zielgerätes muss entsprechend nicht vorab getroffen werden, sondern kann situationsbedingt erfolgen. Dies ist besonders vorteilhaft zur Vermeidung von Engpässen an Zielgeräten, da einfach ein alternatives Zielgerät ausgewählt werden kann.

Des Weiteren kann das Netzwerk einen Verzeichnisdienst umfassen, insbesondere eine Active Directory oder einem anderen LDAP-Dienst sowie ein anderes Datenbanksystem. Unter einem Verzeichnisdienst versteht sich allgemein ein Dienst bzw. eine Einheit, welche in einem Netzwerk eine zentrale Sammlung an Daten bestimmter Art zur Verfügung stellt, insbesondere Sicherheitsrelevante Daten.

Ein weiterer Aspekt der Erfindung betrifft ein Verfahren zur authentifizierten Ansteuerung eines Zielgeräts, insbesondere eines Druckers, in einem Netzwerk, insbesondere wie bereits vorgängig erläutert. Das Netzwerk umfasst mindestens einen Client, insbesondere Computer, zur Generierung eines Auftrags, mindestens einen, insbesondere zentralen, Zwischenspeicher, insbesondere einem Printserver. Der Zwischenspeicher ist dabei derart ausgestaltet, dass ein von dem mindestens einen Client, insbesondere Computer, generierter Auftrag zwischenspeicherbar ist. Des Weiteren umfasst das Netzwerk mindestens eine EDV-Kontrolleinheit aufweisend ein System zur Benutzer-Authentifizierung und mindestens zwei Zielgeräte, insbesondere Drucker. Das Verfahren zur authentifizierten Ansteuerung eines Zielgeräts in einem Netzwerk wie vorgängig erläutert umfasst die Schritte:
a) Generieren eines Auftrags durch den mindestens einen Client, insbesondere Computer;
b) Zwischenspeichern des Auftrags durch den mindestens einen Zwischenspeicher, insbesondere Printserver;
c) Benutzer-Authentifizierung an der EDV-Kontrolleinheit, insbesondere mittels Handflächen-Venen-Erkennung;
d) benutzerauthentifiziertes Auswählen eines der mindestens zwei Zielgeräte, insbesondere Drucker, und Übermitteln des Auftrags an das ausgewählte Zielgerät.

Vorteilhaft dabei ist, dass ein generierter Auftrag benutzerauthentifiziert ausgewählt und an eines der mindestens zwei Zielgeräte übermittelt wird. Somit erfolgt eine Authentifizierung und Zuweisung auf der Ebene des Zwischenspeichers und muss nicht vorab getroffen werden. Da die Auswahl eines Zielgerätes entsprechend nicht vorab getroffen werden muss, kann die Auswahl situationsbedingt, beispielsweise um Engpässe der Zielgeräte zu vermeiden, erfolgen. Dies ist besonders vorteilhaft, da einfach ein alternatives Zielgerät ausgewählt werden kann.

Des Weiteren kann das in dem Verfahren eingesetzte System zur Benutzer-Authentifizierung auf der biometrischen Erkennung eines oder mehrerer Venen, insbesondere auf Handflächen-Venen-Erkennung, basieren. Ebenso kann das System auf der Erkennung eines Fingerabdruckes, einer Retina, einer Iris oder einer Stimme basieren. Auf diese Weise können benutzerspezifische Eigenschaften zur Gewährleistung eines hohen Sicherheitsstandards für die Benutzer-Authentifizierung herangezogen werden.

Ein weiterer Aspekt der Erfindung betrifft die Verwendung einer EDV-Kontrolleinheit, insbesondere wie vorgängig ausgestaltet, aufweisend ein System zur Benutzer-Authentifizierung, insbesondere wie vorgängig ausgestaltet, in einem Netzwerk.

Des Weiteren betrifft die Erfindung ein Verfahren zum Nachrüsten eines Netzwerks. Dabei wird ein Netzwerk mit einer EDV-Kontrolleinheit, welche wie insbesondere vorgängig erläutert ausgestaltet ist, nachgerüstet. Auf diese Weise können bestehende Netzwerke mit dem vorgängigen System zur Benutzer-Authentifizierung einfach und kostengünstig nachgerüstet werden.

Die Erfindung wird im Folgenden anhand von Abbildungen exemplarischer Ausführungsbeispiele näher erläutert.

Es zeigen:
- Fig. 1:: Flowchart eines erfindungsgemässen Netzwerkes;
- Fig. 2:: schematische Zeichnung einer bevorzugten Ausführungsform des erfindungsgemässen Netzwerks;
- Fig. 3:: schematische Zeichnung einer erfindungsgemässen EDV-Kontrolleinheit.

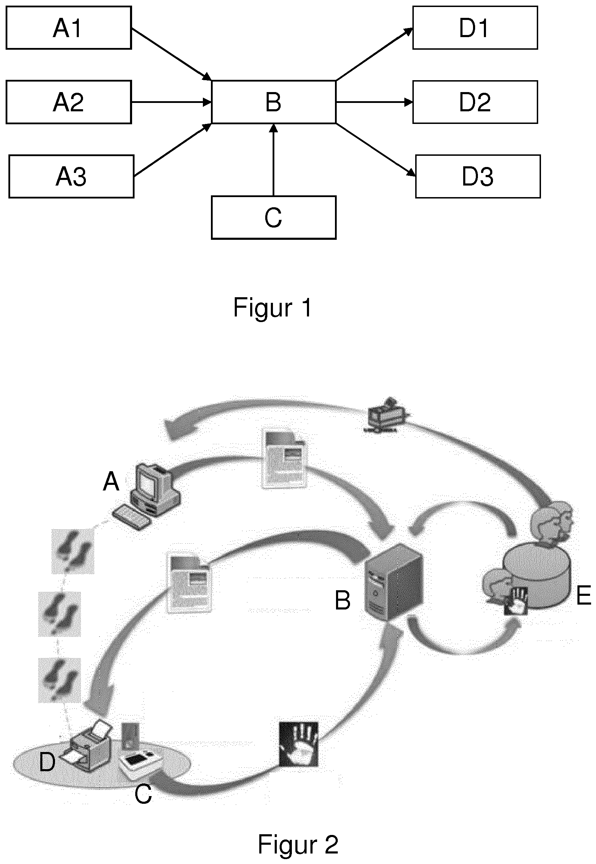

Figur 1 zeigt drei Clients A1, A2, A3 welche mit einem Printserver B verbunden sind. Eine EDV-Kontrolleinheit C ist mit dem Printserver B verbunden. Der Printserver B weist drei Ausgänge auf und ist über die Ausgänge mit drei Zielgeräten verbunden. In diesem Fall sind die Zielgeräte die Drucker D1, D2, D3. Ein durch einen Client generierter Auftrag wird an den Printserver B übermittelt und von diesem zwischengespeichert. Die EDV-Kontrolleinheit C umfasst ein System zur Benutzer-Authentifizierung. Nach einer erfolgten Benutzer-Authentifizierung an der EDV-Kontrolleinheit C kann ein Benutzer einen der Drucker D1, D2, D3 auswählen und den zwischengespeicherten Auftrag von dem Printserver B an den ausgewählten Drucker übermitteln.

Figur 2 zeigt eine schematische Zeichnung eines Netzwerks umfassend einen Computer A, einen Printserver B, ein EDV-Kontrolleinheit C umfassend einen Handvenenscanner und einen Smartcard Reader, einen Drucker D sowie eine Active Directory E. Ein von dem Computer A generierter Druckauftrag wird vom Printserver B zwischengespeichert. Nach einer erfolgten Authentifizierung und/oder Identifizierung mittels Handflächen-Venen-Erkennung und Smartcard durch einen derart authentifizierten Benutzer wird der Druckauftrag vom Printserver B an den Drucker D übermittelt. Für die Authentifizierung erfolgt eine Datenabgleich zwischen bspw. den vom Handvenenscanner erfassten biometrischen Daten und den in der Active Directory hinterlegten Benutzerdaten.

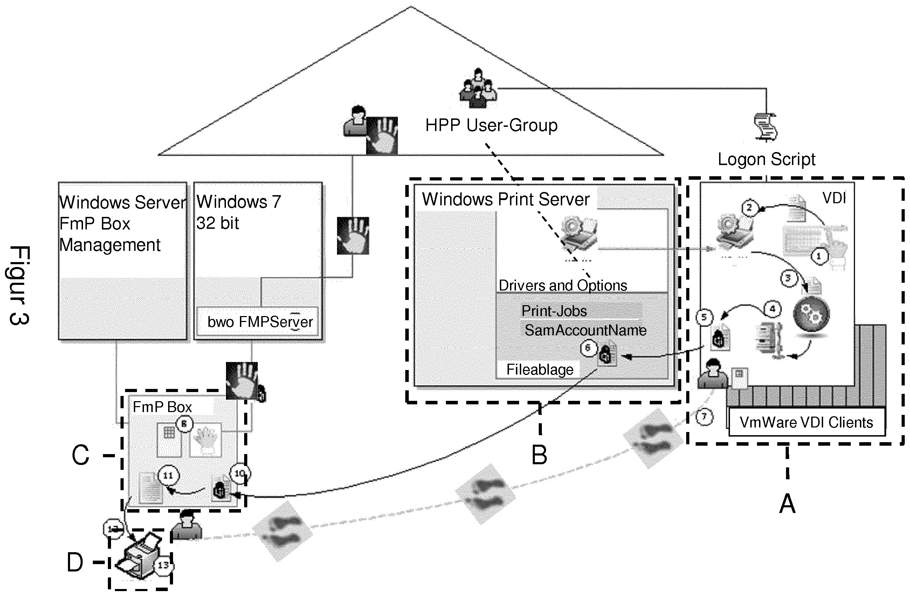

Figur 3 zeigt eine weitere Ausführungsform eines erfindungsgemässen Netzwerks. Gezeigt sind ein Computer A, ein Printserver B, eine EDV-Kontrolleinheit C sowie ein Drucker D. Die EDV-Kontrolleinheit C umfasst einen Handvenenscanner, einen Smartcard Reader und ein Display, insbesondere zur Eingabe von OTP (One Time Token Password). Ein Dokument wird lokal auf dem Computer A verarbeitet, dabei aber nicht direkt an den Printserver B als Druckauftrag verschickt. Das Dokument wird zunächst gespoolt und lokal verschlüsselt, komprimiert und danach an den Printserver B verschickt. Auf dem Printserver B wird der so generierte Druckauftrag zwischengespeichert. Die EDV-Kontrolleinheit C lädt nach einer erfolgten Authentifizierung und/oder Identifizierung den Druckauftrag vom Printserver B herunter, entpackt und entschlüsselt diesen und übermittelt den Druckauftrag an den Drucker D. Die Entschlüsselung erfolgt dabei entweder mittels eines OTP oder des Zertifikats auf der eingesetzten Smartcard. Das OTP wird dem Benutzer zugestellt, beispielsweise per E-Mail oder SMS.

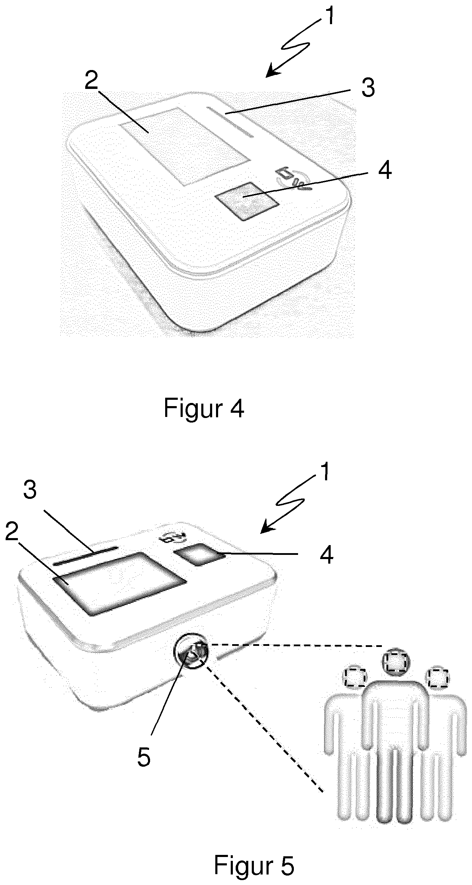

Figur 4 zeigt schematische eine EDV-Kontrolleinheit 1 umfassend einen Handvenenscanner 2, einen Smartcard Reader 3 und ein Display 4. Mittels des Handvenenscanners 2 werden die Handvenen eines Benutzers erfasst und für eine erste Sicherheitsabfrage verwendet. Durch das Einführen einer Smartcard in den Smartcard Reader 3 wird eine weitere Sicherheitsabfrage gewährleistet. Das Display 4 zeigt betriebs- und/oder benutzungsrelevante Informationen an.

Durch den Handvenenscanner 2 wird eine vom zu authentifizierenden Benutzer angezeigte Handposition erfasst und entsprechend einer Zuordnung von Position und Drucker der Druckauftrag an einen gewünschten Drucker übermittelt. Beispielsweise wird die Orientierung der Handfläche erfasst. Orientierung sind rechtsseitige und/oder linksseitige Ausrichtungen der Handfläche. Dabei zeigt die Handfläche jeweils in Richtung des Handvenenscanners 2, sodass die Handvenen erfasst werden. Durch eine rechtsseitige Ausrichtung kann beispielsweise ein erstes Zielgerät und mit einer linksseitigen Ausrichtung ein zweites Zielgerät ausgewählt werden.

Figur 5 zeigt eine weitere Ausführungsform der EDV-Kontrolleinheit 1 umfassend die Merkmale wie bereits in der Beschreibung zu Figur 4 erläutert. Des Weiteren umfasst die EDV-Kontrolleinheit 1 eine Kamera 5. Die Kamera 5 erfasst mittels eines oder mehrere Sensoren die Anzahl Benutzer vor einem Drucker bzw. in einem Druckerraum. Das System kann derart eingestellt sein, dass hochsensible/kritische Druckaufträge nicht ausgeführt werden, wenn sich mehr als eine Person vor dem Drucker bzw. in dem Druckerraum befinden.

## Patentansprüche

1. EDV-Kontrolleinheit (C) für einen Zwischenspeicher (B), insbesondere einen Printserver, wobei der Zwischenspeicher (B) derart ausgestaltet ist, dass ein von mindestens einem Client (A1, A2, A3) generierter Auftrag zwischenspeicherbar ist, wobei die EDV-Kontrolleinheit (C) ein System zur Benutzer-Authentifizierung aufweist, mittels dessen
- ein Zielgerät (D1, D2, D3) für den vom Client (A1, A2, A3) empfangenen und in dem Zwischenspeicher (B) zwischengespeicherten Auftrag benutzerauthentifiziert auswählbar ist und
- die benutzerauthentifizierte Übermittlung des zwischengespeicherten Auftrags an das ausgewählte Zielgerät (D1, D2, D3) durchführbar ist.

2. EDV-Kontrolleinheit gemäss Anspruch 1, wobei das System zur Benutzer-Authentifizierung auf der Erkennung einer oder mehrerer Venen, insbesondere auf Handflächen-Venen-Erkennung, basiert.

3. EDV-Kontrolleinheit gemäss Anspruch 1, wobei das System zur Benutzer-Authentifizierung auf der Erkennung eines Fingerabdrucks, einer Retina, einer Iris, eines Gesichts oder einer Stimme basiert.

4. EDV-Kontrolleinheit gemäss einem der Ansprüche 1 bis 3, wobei das System zur Benutzer-Authentifizierung Elemente aufweist ausgewählt aus der Liste Scanner, Smartcard Reader und PIN-Abfrage.

5. EDV-Kontrolleinheit gemäss einem der Ansprüche 1 bis 4, wobei das System zur Benutzer-Authentifizierung einen Sensor aufweist, der derart ausgestaltet ist, dass je nach Position der für die Benutzer-Authentifizierung verwendeten Biometrie-Eigenschaft eine Zuweisung an ein Zielgerät erfolgt.

6. EDV-Kontrolleinheit gemäss Anspruch 5, wobei das System zur Benutzer-Authentifizierung auf Handflächen-Venen-Erkennung basiert und der Sensor derart ausgestaltet ist, dass eine Handposition und/oder eine Orientierung einer Handfläche erfasst wird und entsprechend einer Zuordnung von Position und Zielgerät ein Auftrag an ein gewünschtes Zielgerät übermittelt wird.

7. Netzwerk umfassend
- mindestens einen Client, insbesondere Computer, zur Generierung eines Auftrags,
- mindestens einen, insbesondere zentralen, Zwischenspeicher, insbesondere einen Printserver, welcher derart ausgestaltet ist, dass ein von dem mindestens einen Client, insbesondere Computer, generierter Auftrag zwischenspeicherbar ist,
- mindestens eine EDV-Kontrolleinheit, insbesondere gemäss einem der Ansprüche 1 bis 6, aufweisend ein System zur Benutzer-Authentifizierung,
- mindestens ein, vorzugsweise zwei Zielgeräte, insbesondere Drucker,
wobei die mindestens eine EDV-Kontrolleinheit derart ausgestaltet ist, dass mittels des Systems zur Benutzer-Authentifizierung, insbesondere durch Handflächen-Venen-Erkennung, ein Auftrag authentifiziert von dem Zwischenspeicher, insbesondere dem Printserver, an eines der mindestens zwei Zielgeräte, insbesondere Drucker, leitbar ist.

8. Netzwerk gemäss Anspruch 7, umfassend einen Verzeichnisdienst, insbesondere eine Active Directory.

9. Verfahren zur authentifizierten Ansteuerung eines Zielgeräts (D1, D2, D3), insbesondere eines Drucker, in einem Netzwerk, insbesondere gemäss einem der Ansprüche 7 und 8, umfassend
- mindestens einen Client (A1, A2, A3), insbesondere Computer, zur Generierung eines Auftrags,
- mindestens einen, insbesondere zentralen, Zwischenspeicher (B), insbesondere einem Printserver, welcher derart ausgestaltet ist, das ein von dem mindestens einen Client (A1, A2, A3), insbesondere Computer, generierter Auftrag zwischenspeicherbar ist,
- mindestens eine EDV-Kontrolleinheit (C) aufweisend ein System zur Benutzer-Authentifizierung,
- mindestens zwei Zielgeräte (D1, D2, D3), insbesondere Drucker,
umfassend die Schritte
a) Generieren eines Auftrags durch den mindestens einen Client (A1, A2, A3), insbesondere Computer,
b) Zwischenspeichern des Auftrags durch den mindestens einen Zwischenspeicher (B), insbesondere Printserver,
c) Benutzer-Authentifizierung an der EDV-Kontrolleinheit (C), insbesondere mittels Handflächen-Venen-Erkennung,
d) mittels des Systems zur Benutzerauthentifizierung Auswählen eines der mindestens zwei Zielgeräte (D1, D2, D3), insbesondere Drucker, und Übermitteln des Auftrags an das ausgewählte Zielgerät (D1, D2, D3).

10. Verfahren gemäss Anspruch 9, wobei das System zur Benutzer-Authentifizierung auf der biometrischen Erkennung einer oder mehrere Venen, insbesondere auf Handflächen-Venen-Erkennung, basiert.

11. Verfahren gemäss Anspruch 9, wobei das System zur Benutzer-Authentifizierung auf der Erkennung eines Fingerabdrucks, einer Retina, einer Iris, eines Gesichts oder einer Stimme basiert.

12. Verwendung einer EDV-Kontrolleinheit gemäss einem der Ansprüche 1 bis 6 in einem Netzwerk.

13. Verfahren zum Nachrüsten eines Netzwerks, wobei das Netzwerk mit einer EDV-Kontrolleinheit gemäss einem der Ansprüche 1 bis 6 nachgerüstet wird, insbesondere derart, dass ein Verfahren zur authentifizierte Ansteuerung eines Zielgeräts gemäss einem der Ansprüche 9 bis 11 ermöglicht wird.

## Claims

1. EDP control unit (C) for a buffer (B), in particular a print server, wherein the buffer (B) is configured in such a manner that an order which is generated by at least one client (A1, A2, A3) can be buffered, wherein the EDP control unit (C) has a user authentication system, by means of which
- a destination device (D1, D2, D3) for the order received from the client (A1, A2, A3) and buffered in the buffer (B) can be selected in a user-authenticated manner, and
- the buffered order can be transmitted to the selected destination device (D1, D2, D3) in a user-authenticated manner.

2. EDP control unit according to Claim 1, wherein the user authentication system is based on the recognition of one or more veins, in particular is based on palm vein recognition.

3. EDP control unit according to Claim 1, wherein the user authentication system is based on the recognition of a fingerprint, a retina, an iris, a face or a voice.

4. EDP control unit according to one of Claims 1 to 3, wherein the user authentication system has elements selected from the list of a scanner, a smartcard reader and a PIN request.

5. EDP control unit according to one of Claims 1 to 4, wherein the user authentication system has a sensor which is configured in such a manner that an allocation to a destination device is carried out depending on the position of the biometric property used for the user authentication.

6. EDP control unit according to Claim 5, wherein the user authentication system is based on palm vein recognition and the sensor is configured in such a manner that a hand position and/or an orientation of a palm is/are captured and an order is transmitted to a desired destination device according to an assignment of position and destination device.

7. Network comprising
- at least one client, in particular a computer, for generating an order,
- at least one buffer, in particular a central buffer, in particular a print server, which is configured in such a manner that an order generated by the at least one client, in particular the computer, can be buffered,
- at least one EDP control unit, in particular according to one of Claims 1 to 6, having a user authentication system,
- at least one destination device, preferably two destination devices, in particular printers,
wherein the at least one EDP control unit is configured in such a manner that an order can be passed in an authenticated manner from the buffer, in particular the print server, to one of the at least two destination devices, in particular printers, by means of the user authentication system, in particular by means of palm vein recognition.

8. Network according to Claim 7, comprising a directory service, in particular an active directory.

9. Method for the authenticated control of a destination device (D1, D2, D3), in particular a printer, in a network, in particular according to either of Claims 7 and 8, comprising
- at least one client (A1, A2, A3), in particular a computer, for generating an order,
- at least one buffer (B), in particular a central buffer, in particular a print server, which is configured in such a manner that an order generated by the at least one client (A1, A2, A3), in particular the computer, can be buffered,
- at least one EDP control unit (C) having a user authentication system,
- at least two destination devices (D1, D2, D3), in particular printers,
comprising the steps of
a) generating an order by means of the at least one client (A1, A2, A3), in particular the computer,
b) buffering the order by means of the at least one buffer (B), in particular the print server,
c) user authentication at the EDP control unit (C), in particular by means of palm vein recognition,
d) selecting, by means of the user authentication system, one of the at least two destination devices (D1, D2, D3), in particular printers, and transmitting the order to the selected destination device (D1, D2, D3).

10. Method according to Claim 9, wherein the user authentication system is based on the biometric recognition of one or more veins, in particular on palm vein recognition.

11. Method according to Claim 9, wherein the user authentication system is based on the recognition of a fingerprint, a retina, an iris, a face or a voice.

12. Use of an EDP control unit according to one of Claims 1 to 6 in a network.

13. Method for retrofitting a network, wherein the network is retrofitted with an EDP control unit according to one of Claims 1 to 6, in particular in such a manner that a method for the authenticated control of a destination device according to one of Claims 9 to 11 is enabled.

## Revendications

1. Unité de contrôle informatique (C) pour une mémoire tampon (B), en particulier un serveur d'impression, dans laquelle la mémoire tampon (B) est configurée de telle sorte qu'une tâche générée par au moins un client (A1, A2, A3) puisse être mise en tampon, dans laquelle l'unité de contrôle informatique (C) comprend un système d'authentification d'utilisateur au moyen duquel
- un appareil cible (D1, D2, D3) peut être sélectionné avec authentification de l'utilisateur pour la tâche reçue du client (A1, A2, A3) et mise en tampon dans la mémoire tampon (B), et
- la transmission avec authentification de l'utilisateur de la tâche mise en tampon à l'appareil cible (D1, D2, D3) sélectionné peut être effectuée.

2. Unité de contrôle informatique selon la revendication 1, dans laquelle le système d'authentification d'utilisateur se fonde sur la détection d'une ou plusieurs veines, en particulier de veines de la paume.

3. Unité de contrôle informatique selon la revendication 1, dans laquelle le système d'authentification d'utilisateur se fonde sur la reconnaissance d'une empreinte digitale, d'une rétine, d'un 'iris, d'un visage ou d'une voix.

4. Unité de contrôle informatique selon l'une des revendications 1 à 3, dans laquelle le système d'authentification d'utilisateur comprend des éléments sélectionnés dans une liste comprenant un scanneur, un lecteur de carte à puce et une demande de numéro PIN.

5. Unité de contrôle informatique selon l'une des revendications 1 à 4, dans laquelle le système d'authentification d'utilisateur comporte un capteur conçu de telle sorte que, selon la position de la propriété biométrique utilisée pour l'authentification d'utilisateur, une affectation à un appareil cible soit effectuée.

6. Unité de contrôle informatique selon la revendication 5, dans laquelle le système d'authentification d'utilisateur se fonde sur la reconnaissance de veines de la paume et le capteur est conçu de telle sorte qu'une position et/ou une orientation de la main soit détectée et qu'un tâche soit transmise à l'appareil cible voulu selon une affectation entre la position et l'appareil cible.

7. Réseau, comprenant
- au moins un client, en particulier un ordinateur, pour générer une tâche,
- au moins une mémoire tampon, en particulier centrale, en particulier un serveur d'impression, qui est configurée de telle sorte qu'une tâche générée par au moins un client, en particulier un ordinateur, puisse être mise en tampon,
- au moins une unité de contrôle informatique, en particulier selon l'une des revendications 1 à 6, comprenant un système d'authentification d'utilisateur,
- au moins un, de préférence deux, appareils cibles, en particulier des imprimantes,
dans lequel ladite au moins une unité de contrôle informatique est configurée de telle sorte que, au moyen du système d'authentification d'utilisateur, en particulier par reconnaissance de veines de la paume, une tâche authentifiée par la mémoire tampon, en particulier le serveur d'impression, puisse être dirigée vers l'un desdits au moins deux appareils cibles, en particulier une imprimante.

8. Réseau selon la revendication 7, comprenant un service d'annuaire, en particulier un annuaire Active Directory.

9. Procédé de commande authentifiée d'un appareil cible (D1, D2, D3), en particulier d'une imprimante, dans un réseau, en particulier selon l'une des revendications 7 et 8, comprenant
- au moins un client (A1, A2, A3), en particulier un ordinateur, destiné à générer une tâche,
- au moins une mémoire tampon (B), en particulier centrale, en particulier un serveur d'impression, qui est configurée de telle sorte qu'une tâche générée par au moins un client (A1, A2, A3), en particulier un ordinateur, puisse être mise en tampon,
- au moins une unité de contrôle informatique (C) comportant un système d'authentification d'utilisateur,
- au moins deux appareils cibles (D1, D2, D3), en particulier des imprimantes, comprenant les étapes suivantes
a) générer une tâche par au moins un client (A1, A2, A3), en particulier un ordinateur,
b) mettre en tampon la tâche par ladite au moins une mémoire tampon (B), en particulier le serveur d'impression,
c) authentifier l'utilisateur sur l'unité de contrôle informatique (C), en particulier par reconnaissance de veines de la paume,
d) au moyen du système d'authentification d'utilisateur, sélectionner l'un desdits au moins deux appareils cibles (D1, D2, D3), en particulier des imprimantes, et transmettre la tâche à l'appareil cible sélectionné (D1, D2, D3).

10. Procédé selon la revendication 9, dans lequel le système d'authentification d'utilisateur se fonde sur la reconnaissance biométrique d'une ou plusieurs veines, en particulier sur la reconnaissance de veines de la paume.

11. Procédé selon la revendication 9, dans lequel le système d'authentification d'utilisateur se fonde sur la reconnaissance d'une empreinte digitale, d'une rétine, d'un iris, d'un visage ou d'une voix.

12. Utilisation d'une unité de contrôle informatique selon l'une des revendications 1 à 6 dans un réseau.

13. Procédé de mise à niveau d'un réseau, dans lequel le réseau est mis à niveau avec une unité de contrôle informatique selon l'une des revendications 1 à 6, en particulier de telle sorte qu'un procédé de commande authentifiée d'un appareil cible selon l'une des revendications 9 à 11 soit rendu possible.
